# EUROPEAN PATENT APPLICATION

(11) **EP 4 722 078 A1**
(43) Veröffentlichungstag der Anmeldung: **08.04.2026**
(21) Anmeldenummer: 23938778.0
(22) Anmeldetag: 29.05.2023
(51) Int. Cl.: B62D 5/04, F16H 1/16

(54) **EINSTELLVORRICHTUNG FÜR ZAHN-ZU-ZAHN-SPALT ZWISCHEN SCHNECKENGETRIEBE UND SCHNECKE UND LENKGETRIEBEMECHANISMUS**

(71) Anmelder: Schaeffler Technologies AG & Co. KG, 91074 Herzogenaurach (DE)
(72) Erfinder: CHEN, Chunhui, Shanghai 201804 (CN); ZHOU, Jing, Shanghai 201804 (CN); LU, Xiaoming, Shanghai 201804 (CN)
(74) Vertreter: Schaeffler Technologies
(86) Internationale Anmeldenummer: PCT/CN2023/096931
(87) Internationale Veröffentlichungsnummer: WO 2024/243781

(57) **Zusammenfassung**

Einstellvorrichtung für ein Zahnspiel zwischen einem Schneckenrad und einer Schnecke und ein Lenkgetriebemechanismus. Die Einstellvorrichtung (100) für ein Zahnspiel zwischen einem Schneckenrad und einer Schnecke umfasst: eine Schnecke (10), die um eine erste Mittelachse (O1) drehbar ist; ein Schneckenrad (20), das um eine zweite Mittelachse (O2) drehbar ist und mit der Schnecke (10) in Eingriff steht; und eine Einstellhülse (30), die außerhalb der Schnecke (10) angebracht ist, in der sich die Schnecke (10) um die erste Mittelachse (O1) drehen kann, und die exzentrisch zur Schnecke (10) angeordnet ist. Die Position der Schnecke ändert sich mit der Drehung der Einstellhülse, so dass sich der Mittenabstand zwischen Schnecke und Schneckenrad ändert, wodurch eine schnelle Einstellung des Zahnspiels zwischen Schnecke und Schneckenrad erreicht wird.

## Beschreibung

### Technisches Gebiet

Die vorliegende Erfindung betrifft das technische Gebiet der Servolenkungen von Fahrzeugen, insbesondere eine Einstellvorrichtung für ein Zahnspiel zwischen einem Schneckenrad und einer Schnecke für ein Lenksystem eines Fahrzeugs sowie einen Lenkgetriebemechanismus.

### Hintergrund

Gegenwärtig werden für das Lenksystem von Nutzfahrzeugen im Allgemeinen elektrohydraulische Servolenkungen (nachfolgend als EHPS für "Electro-Hydraulic Power Steering" bezeichnet) angewandt und deren Lenkfunktionen werden durch eine Kombination aus elektrischer und hydraulischer Servounterstützung erreicht. Ein wesentlicher Übertragungsmechanismus bei einer EHPS ist ein Schneckenrad und ein Schneckengetriebemechanismus. Beim Schneckenrad und Schneckengetriebemechanismus hat die Größe des Zahnspiels zwischen Schneckenrad und Schnecke einen großen Einfluss auf den Wirkungsgrad und die Geräuschentwicklung des Getriebes.

Da das Schneckenrad und der Schneckengetriebemechanismus fest in einem Gehäuse montiert sind, treten nach der Montage die folgenden beiden Zusammenwirkungseffekte zwischen dem Schneckenrad und der Schnecke auf.

Wenn ein Mittenabstand geringfügig kleiner und das Zahnspiel übermäßig klein ist, sind Schneckenrad und Schnecke zu fest im Eingriff, und Zahnflächen von Schneckenrad und Schnecke werden gegeneinander gepresst, wodurch sich die Reibungskraft erhöht, der Getriebewirkungsgrad sinkt und der Verschleiß der Zahnflächen von Schneckenrad und Schnecke zunimmt.

Wenn der Mittenabstand etwas größer ist und das Zahnspiel übermäßig groß ist, sind Schneckenrad und Schnecke zu locker im Eingriff, was zu einem Zwischenraum zwischen den Zahnflächen von Schneckenrad und Schnecke führt. Bei der Umkehrung der Schnecke muss die Schnecke zunächst um einen bestimmten Winkel gedreht werden, um den Zwischenraum zu überwinden, bevor sie mit dem Schneckenrad im entgegengesetzten Drehsinn in Eingriff kommt. Der daraus resultierende Aufprall erzeugt Lärm und beeinträchtigt auch die Lebensdauer der Zahnflächen.

Im Stand der Technik wird bei einem Einstellmechanismus für das Zahnspiel im Allgemeinen ein Verfahren zur Einstellung einer Position eines Lagers am hinteren Ende der Schnecke angewandt. Die Einstellung der Position eines Lagers am vorderen Ende der Schnecke führt zu einer Verschiebung der Mittelachse der Schnecke, wodurch sich ein Winkel zwischen der Mittellinie einer Motorabtriebswelle und der Mittelachse der Schnecke ergibt. Dementsprechend schwanken das von einem Motor auf die Schnecke übertragene Drehmoment und die Drehzahl, was sich auf die Drehmoment- und Drehzahlausgabe des Schneckenrads auswirkt und letztlich das Lenkgefühl und die Stabilität, die vom Fahrer wahrgenommen werden, beeinträchtigt.

### Kurzdarstellung

Zur Überwindung der im Stand der Technik bestehenden Probleme sieht die vorliegende Offenbarung eine Einstellvorrichtung für ein Zahnspiel zwischen einem Schneckenrad und einer Schnecke sowie einen Lenkgetriebemechanismus vor.

Gemäß einem ersten Aspekt einer Ausführungsform der vorliegenden Offenbarung ist eine Einstellvorrichtung für ein Zahnspiel zwischen einem Schneckenrad und einer Schnecke vorgesehen, umfassend: eine Schnecke, die um eine erste Mittelachse drehbar ist; ein Schneckenrad, das um eine zweite Mittelachse drehbar ist und mit der Schnecke in Eingriff steht; und eine Einstellhülse, die außerhalb der Schnecke angebracht ist und ein Drehen der Schnecke um die erste Mittelachse innerhalb der Einstellhülse ermöglicht, wobei die Einstellhülse exzentrisch zur Schnecke angeordnet ist und durch Drehung der Einstellhülse eine Position der ersten Mittelachse der Schnecke geändert wird, um einen Mittenabstand zwischen der ersten Mittelachse und der zweiten Mittelachse des Schneckenrads einzustellen, wodurch eine Einstellung eines Zahnspiels zwischen der Schnecke und dem Schneckenrad erreicht wird.

In einigen Ausführungsformen ist ein Endabschnitt der Einstellhülse mit einem Flansch versehen, der Flansch ist mit ersten Langlöchern versehen, die sich entlang einer Umfangsrichtung erstrecken, die Einstellvorrichtung für ein Zahnspiel zwischen einem Schneckenrad und einer Schnecke umfasst ferner ein Gehäuse für ein Untersetzungsgetriebe, und sich die Einstellhülse innerhalb des Gehäuses für das Untersetzungsgetriebe befindet, wobei die Einstellhülse stets mit dem Gehäuse für das Untersetzungsgetriebe über die ersten Langlöcher innerhalb eines vorgegebenen Drehbereichs fest verbunden werden kann.

In einigen Ausführungsformen umfasst die Einstellvorrichtung für ein Zahnspiel zwischen einem Schneckenrad und einer Schnecke ferner: ein Motorgehäuse, wobei ein Endabschnitt des Motorgehäuses mit Gewindelöchern versehen ist; und eine Motorabtriebswelle, die sich innerhalb des Motorgehäuses befindet und dazu konfiguriert ist, mit der Schnecke in Übertragungsverbindung zu stehen, wobei eine Position des Motorgehäuses durch Einstellen der Motorabtriebswelle geändert wird, um koaxial mit der Schnecke ausgerichtet zu werden, wobei ein Endabschnitt des bGehäuses des Untersetzungsgetriebes mit einer Verbindungsplatte versehen ist, die Verbindungsplatte darauf mit zweiten Langlöchern versehen ist, die sich entlang einer Umfangsrichtung erstrecken, und die zweiten Langlöcher die Gewindelöcher entlang der Umfangsrichtung stets abdecken, nachdem die Position des Motorgehäuses geändert wurde.

In einigen Ausführungsformen passt eine Außenwand der Einstellhülse mit einer Innenwand des Gehäuses zusammen, und vor der Befestigung der Einstellhülse an dem Gehäuse ist die Einstellhülse innerhalb des Gehäuses um eine dritte Mittelachse drehbar.

In einigen Ausführungsformen umfasst die Schnecke ein vorderes und ein hinteres Lager, die jeweils an beiden Enden der Schnecke angebracht sind und dazu verwendet werden, ein Drehen der Schnecke um die erste Mittelachse innerhalb der Einstellhülse zu ermöglichen und die erste Mittelachse parallel zur dritten Mittelachse zu stellen.

In einigen Ausführungsformen ist ein mittlerer Abschnitt der Einstellhülse mit einer Öffnung versehen, die zum Ermöglichen verwendet wird, dass die in der Einstellhülse befindliche Schnecke mit dem Schneckenrad in Kontakt und in Eingriff kommen kann. In einigen Ausführungsformen umfasst die Einstellvorrichtung für ein Zahnspiel zwischen einem Schneckenrad und einer Schnecke ferner eine Klauenkupplung, die elastisch und starr zwischen der Schnecke und der Motorabtriebswelle verbunden ist. In einigen Ausführungsformen ist der Flansch mit zwei der ersten Langlöcher in Umfangsrichtung versehen.

In einigen Ausführungsformen ist die Verbindungsplatte des Gehäuses des Untersetzungsgetriebes mit zwei der zweiten Langlöcher in Umfangsrichtung versehen.

Gemäß einem zweiten Aspekt einer Ausführungsform der vorliegenden Offenbarung sieht die vorliegende Offenbarung einen Lenkgetriebemechanismus für ein Lenkgetriebesystem eines Fahrzeugs vor, umfassend: die Einstellvorrichtung für ein Zahnspiel zwischen einem Schneckenrad und einer Schnecke, die im ersten Aspekt beschrieben ist.

Technische Lösungen, die durch die Ausführungsformen der vorliegenden Offenbarung vorgesehen sind, können die folgenden vorteilhaften Effekte umfassen: Die dritte Mittelachse der Einstellhülse ist parallel und versetzt zur ersten Mittelachse der Schnecke, und ein Abstand zwischen der dritten Mittelachse der Einstellhülse und der zweiten Mittelachse des Schneckenrads bleibt unverändert. Mit der Drehung der Einstellhülse um die dritte Mittelachse ändert sich auch die Position der ersten Mittelachse der Schnecke, so dass sich der Mittenabstand zwischen Schnecke und Schneckenrad ändert. Im Vergleich zu einer herkömmlichen Einstellvorrichtung für ein Zahnspiel entfallen Konstruktionen wie eine Einstellfeder, ein Einstellbolzen und ein spezielles Pendellager, so dass die Einstellvorrichtung für ein Zahnspiel zwischen einem Schneckenrad und einer Schnecke der vorliegenden Offenbarung klein und einfach im Aufbau, bequem und einfach zu installieren und zu demontieren und kostengünstiger ist.

### Kurzbeschreibung der Zeichnungen

Die beigefügten Zeichnungen, die in die Beschreibung aufgenommen sind und einen Teil der Beschreibung darstellen, veranschaulichen Ausführungsformen gemäß der vorliegenden Offenbarung und dienen dazu, die Grundsätze der vorliegenden Offenbarung im Zusammenhang mit der Beschreibung zu erläutern.
FIG. 1 zeigt eine Schnittansicht einer Einstellvorrichtung für ein Zahnspiel zwischen einem Schneckenrad und einer Schnecke, gemäß einem Ausführungsbeispiel;
FIG. 2 zeigt eine kombinierte schematische Konstruktionsdarstellung einer Schnecke und einer Einstellhülse gemäß einem Ausführungsbeispiel;
FIG. 3 zeigt eine Schnittansicht der Schnecke, des Schneckenrads und der Einstellhülse gemäß einem Ausführungsbeispiel;
FIG. 4 zeigt eine schematische Konstruktionsdarstellung eines Flansches der Einstellhülse gemäß einem Ausführungsbeispiel;
FIG. 5 zeigt eine schematische Darstellung der Lagebeziehung zwischen der Einstellhülse, der Schnecke und einem Gehäuse für ein Untersetzungsgetriebe gemäß einem Ausführungsbeispiel; und
FIG. 6 zeigt eine schematische Konstruktionsdarstellung von zweiten Langlöchern des Gehäuses des Untersetzungsgetriebes gemäß einem Ausführungsbeispiel.

### Ausführliche Beschreibung

Die Ausführungsbeispiele werden hier im Detail dargestellt und sind in den beigefügten Zeichnungen beispielhaft veranschaulicht. Wenn in der folgenden Beschreibung auf die beigefügten Zeichnungen Bezug genommen wird, stehen, sofern nicht anders angegeben, gleiche Bezugszeichen in verschiedenen beigefügten Zeichnungen für gleiche oder ähnliche Elemente. Die in den folgenden Ausführungsbeispielen beschriebenen Umsetzungen stellen nicht alle Umsetzungen im Sinne der vorliegenden Offenbarung dar. Im Gegenteil, sie sind lediglich Beispiele für Vorrichtungen und Verfahren, die mit einigen Aspekten der vorliegenden Offenbarung übereinstimmen, wie sie in den beigefügten Ansprüchen im Einzelnen beschrieben sind.

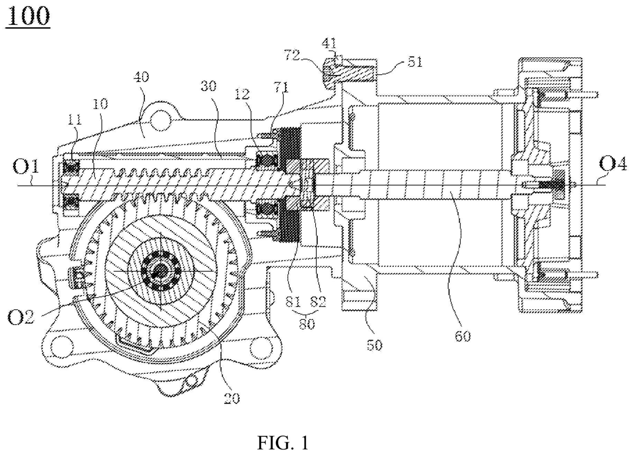

Im Rahmen der vorliegenden Erfindung bezieht sich ein vorderes Ende einer Schnecke auf ein vom Motor abgewandtes Ende, wie auf der linken Seite in FIG. 1, FIG. 2 und FIG. 3 gezeigt. Ein hinteres Ende der Schnecke bezieht sich auf ein Ende in der Nähe des Motors, wie auf der rechten Seite in FIG. 1, FIG. 2 und FIG. 3 gezeigt. Zusätzlich bezieht sich "Übertragungsverbindung" darauf, dass eine Antriebskraft/ein Drehmoment zwischen zwei Komponenten übertragen werden kann. Die beiden Komponenten können direkt miteinander verbunden sein oder können auch über verschiedene Übertragungsmechanismen bzw. Verbindungskonstruktionen verbunden sein, um die vorgenannte Funktion zu erfüllen. Der Begriff "drehfeste Verbindung" bezieht sich darauf, dass ein Drehmoment zwischen zwei Komponenten übertragen werden kann, und ein Verfahren zum Erreichen der drehfesten Verbindung kann eine Presspassung, Schraubverbindung usw. beinhalten.

Im Stand der Technik gibt es viele Einstellungslösungen für ein Zahnspiel zwischen Schneckenrädern und Schnecken, die für Lenksysteme von Fahrzeugen verwendet werden, und die Fahrzeuge umfassen Personenkraftwagen und Nutzfahrzeuge, wobei die Betriebsbedingungen der Schneckenräder und Schnecken, die in Personenkraftwagen verwendet werden, sich von den Betriebsbedingungen der Schneckenräder und Schnecken, die in Nutzfahrzeugen verwendet werden, unterscheiden.

Die Lenkung von Nutzfahrzeugen erfolgt hauptsächlich mit hydraulischer Servounterstützung, und die für die Schneckenräder und Schnecken mit elektrischer Unterstützung erforderlichen Kräfte sind recht gering, so dass ein Verschleiß vernachlässigbar ist. Daher können selbsteinstellende Konstruktionen von Personenkraftwagen nicht verwendet werden. Stattdessen kann ein Eingriffszustand während der Produktmontage eingestellt werden.

Die Lenkung von Personenkraftwagen wird hauptsächlich und im Wesentlichen durch Drehmomente erreicht, die von den Schneckenrädern und Schnecken verstärkt werden, die von Motoren angetrieben werden, wobei die Eingriffskräfte zwischen den Schneckenrädern und den Schnecken etwas größer sind, so dass ein schneller Verschleiß auftritt und eine Selbsteinstellfunktion erforderlich ist. Die Positionen der vorderen Lager werden durch ein Verfahren mit Spannen von Federn eingestellt. Nachdem die Schneckenräder und Schnecken eine Zeit lang in Betrieb sind, tritt Verschleiß auf. Dabei geben die Federn ihre Federkraft frei, um das vordere Lager an den Schnecken fest zu pressen und die Schnecken anzutreiben, sich nahe an die Schneckenräder heranzubewegen, wodurch das durch den Verschleiß entstandenen Spiel beseitigt wird und ermöglicht wird, dass die Schneckenräder und Schnecken immer in einem guten Eingriffszustand verbleiben. Eine solche Methode zur Einstellung von Federn, die in Personenkraftwagen verwendet wird, erfordert jedoch eine Vielzahl von Bauteilen, die kompliziert aufgebaut und schwer zu fertigen und montieren sind.

Zur Lösung der oben genannten technischen Probleme sieht die vorliegende Offenbarung eine Einstellvorrichtung 100 für ein Zahnspiel zwischen einem Schneckenrad und einer Schnecke vor. Wie in FIG. 1 gezeigt, umfasst die Einstellvorrichtung 100 für ein Zahnspiel zwischen einem Schneckenrad und einer Schnecke zumindest ein Gehäuse 40 für ein Untersetzungsgetriebe sowie eine Schnecke 10, ein Schneckenrad 20 und eine Einstellhülse 30, die sich innerhalb des Gehäuses 40 des Untersetzungsgetriebes befindet.

Die Schnecke 10 ist um eine erste Mittelachse O1 drehbar, und das Schneckenrad 20 ist um eine zweite Mittelachse O2 drehbar, die senkrecht zur ersten Mittelachse O1 steht und zu dieser versetzt ist. Daher kann ein Eingriff des Schneckenrads 20 und der Schnecke 10 eine Umlenkung eines von der Schnecke 10 übertragenen Drehmoments um 90° bewirken und das von der Schnecke 10 übertragene Drehmoment verstärken.

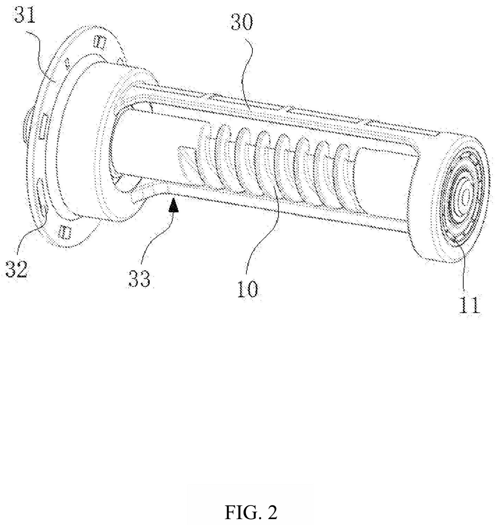

Wie ferner in FIG. 2 gezeigt, kann die Einstellhülse 30 außerhalb der Schnecke 10 angebracht sein. In einigen Ausführungsformen ist ein mittlerer Abschnitt der Einstellhülse 30 mit einer Öffnung 33 versehen, die zum Ermöglichen verwendet wird, dass die in der Einstellhülse 30 befindliche Schnecke 10 mit dem Schneckenrad 20 in Kontakt und in Eingriff kommen kann. Ferner sind entlang einer Richtung der ersten Mittelachse O1 der Schnecke 10 ein vorderes Ende (ein rechtes Ende, wie in FIG. 22 gezeigt) und ein hinteres Ende (ein linkes Ende, wie in FIG. 2 gezeigt) der Schnecke 10 mit jeweils einem vorderen Lager 11 und einem hinteren Lager 12 versehen, ein Innenring des vorderen Lagers 11 und ein Innenring des hinteren Lagers 12 sind jeweils am vorderen Ende und am hinteren Ende der Schnecke 10 drehfest angebracht, und ein Außenring des vorderen Lagers 11 und ein Außenring des hinteren Lagers 12 sind jeweils mit einer Innenwand der Einstellhülse 30 drehfest verbunden. Das vordere Lager 11 und das hintere Lager 12 werden zum Befestigen der Schnecke 10 innerhalb der Einstellhülse 30 verwendet und ermöglichen der Schnecke 10, sich innerhalb der Einstellhülse 30 um die erste Mittelachse O1 relativ zur Einstellhülse 30 zu drehen.

Wenn ferner die Einstellhülse 30 im Gehäuse 40 des Untersetzungsgetriebes vorinstalliert und nicht am Gehäuse 40 des Untersetzungsgetriebes befestigt ist, kann eine Außenwand der Einstellhülse 30 mit einer Innenwand des Gehäuses 40 des Untersetzungsgetriebes zusammenpassen, und die Außenwand der Einstellhülse 30 kann in Zwischenraumpassung mit der Innenwand des Gehäuses 40 des Untersetzungsgetriebes stehen, so dass die Einstellhülse 30 innerhalb des Gehäuses 40 des Untersetzungsgetriebes um eine dritte Mittelachse O3 relativ zum Gehäuses 40 des Untersetzungsgetriebes drehbar ist. In einigen anderen Ausführungsformen kann eine Drehung der Außenwand der Einstellhülse 30 und der Innenwand des Gehäuses 40 des Untersetzungsgetriebes um die dritte Mittelachse O3 auch durch ein Lager erreicht werden, wobei hierin keine ausdrückliche Einschränkung gegeben ist.

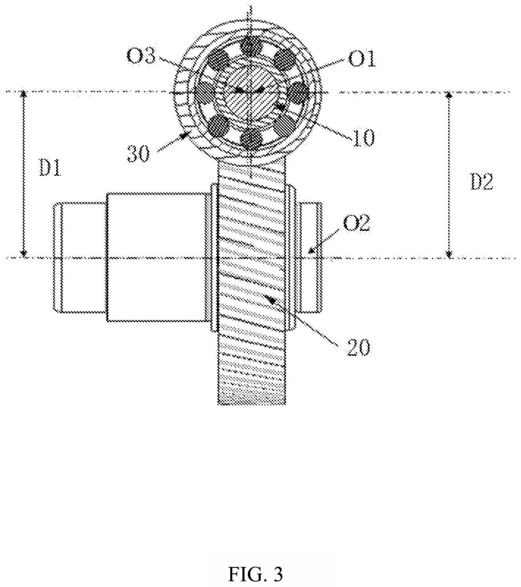

Wie in FIG. 3 gezeigt, ist die Einstellhülse 30 exzentrisch zu der Schnecke 10 angeordnet. Vorzugsweise ist die dritte Mittelachse O3 der Einstellhülse 30 parallel und versetzt zur ersten Mittelachse O1 der Schnecke 10. Insbesondere ist in dieser Ausführungsform ein Querschnitt der Einstellhülse 30 kreisförmig, ein Innenraum der Einstellhülse 30 ist mit einer Schneckenbohrung mit ebenfalls kreisförmigem Querschnitt versehen, die Schnecke 10, das vordere Lager 11 und das hintere Lager 12 befinden sich innerhalb der Schneckenbohrung, und eine Mitte der Einstellhülse 30 überschneidet sich nicht mit einer Mitte der Schneckenbohrung (d.h. der ersten Mittelachse O1 der Schnecke 10). Zu diesem Zeitpunkt können das vordere Lager 11 und das hintere Lager 12 der Schnecke 10 verwendet werden, um die erste Mittelachse O1 der Schnecke 10 parallel zur dritten Mittelachse O3 der Einstellhülse 30 mit einem unveränderten Versatzabstand zu halten, um ein Verkanten der Schnecke 10 in der Schneckenbohrung zu verhindern.

Es ist zu erkennen, dass die Schnecke 10, die sich innerhalb der Einstellhülse 30 befindet, zur gemeinsamen Bewegung angetrieben werden kann, und die erste Mittelachse O1 der Schnecke 10 in die Lage versetzt wird, eine kreisförmige Bewegung um die dritte Mittelachse O3 als Achse auszuführen, wenn die Einstellhülse 30 um die dritte Mittelachse O3 gedreht wird, wodurch eine Position der ersten Mittelachse O1 der Schnecke 10 verändert wird.

Da ein Abstand (nachfolgend als erster Mittenabstand D1 bezeichnet) zwischen der dritten Mittelachse O3 und der zweiten Mittelachse O2 unverändert bleibt, wenn sich die Position der ersten Mittelachse O1 der Schnecke 10 ändert, ändert sich ein Mittenabstand (nachfolgend als zweiter Mittenabstand D2 bezeichnet) zwischen der ersten Mittelachse O1 der Schnecke 10 und der zweiten Mittelachse O2 des Schneckenrads 20 (d. h., er wird größer oder kleiner), wodurch eine Einstellung eines Zahnspiels zwischen der Schnecke 10 und dem Schneckenrad 20 erreicht wird.

Zusammenfassend lässt sich sagen, dass durch Vorsehen der Einstellhülse 30 exzentrisch zur Schnecke 10, d. h., durch Ermöglichen, dass die dritte Mittelachse O3 der Einstellhülse 30 parallel und versetzt zur ersten Mittelachse O1 der Schnecke 10 ist und der erste Mittenabstand D1 zwischen der dritten Mittelachse O3 der Einstellhülse 30 und der zweiten Mittelachse O2 des Schneckenrads 20 unverändert bleibt, die erste Mittelachse O1 der Schnecke 10 sich mit der Drehung der Einstellhülse 30 um die dritte Mittelachse O3 drehen kann, wodurch sich der zweite Mittenabstand D2 zwischen der Schnecke 10 und dem Schneckenrad 20 ändert.

In der vorliegenden Offenbarung ist ein Verfahren zur Einstellung des Zahnspiels zwischen einer Schnecke 10 und einem Schneckenrad 20 einfach und kann eine schnelle und genaue Einstellung des Zahnspiels zwischen Schnecke 10 und Schneckenrad 20 erreichen. Darüber hinaus entfallen in der vorliegenden Offenbarung im Vergleich zu einer herkömmlichen Einstellvorrichtung für ein Zahnspiel Konstruktionen wie eine Einstellfeder, ein Einstellbolzen und ein spezielles Pendellager, so dass die Einstellvorrichtung 100 für ein Zahnspiel zwischen einem Schneckenrad und einer Schnecke der vorliegenden Offenbarung nur wenige Bauteile aufweist, einfach aufgebaut und einfach zu montieren ist sowie geringe Gesamtkosten aufweist.

Es sei angemerkt, dass wenn die Größe der Öffnung 33 an der Einstellhülse 30 entlang der Umfangsrichtung der Einstellhülse 30 eine Drehung der Einstellhülse 30 um einen vorgegebenen Drehwinkel ermöglicht, sichergestellt ist, dass die Schnecke 10 und das Schneckenrad 20 stets in Eingriff gebracht werden können. Darüber hinaus kann ein Versatzabstand zwischen der dritten Mittelachse O3 und der ersten Mittelachse O1 entsprechend den unterschiedlichen Anforderungen an die Einstellung des Zahnspiels bestimmt werden, wobei hierin keine ausdrückliche Einschränkung gegeben ist.

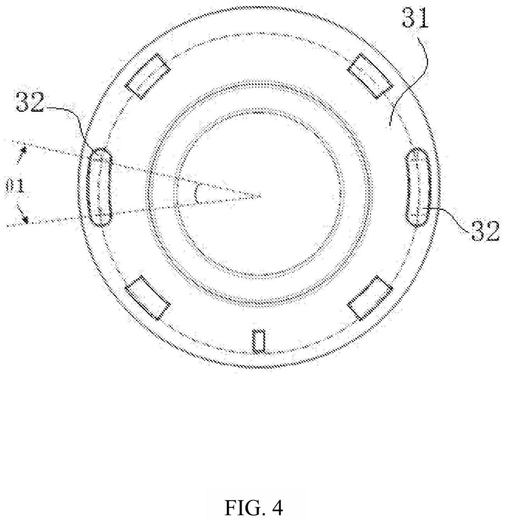

In einigen Ausführungsformen, wie in FIG. 1, FIG. 2 und FIG. 4 gezeigt, ist ein Endabschnitt der Einstellhülse 30 mit einem Flansch 31 versehen, und der Flansch 31 befindet sich an einem Ende der Einstellhülse 30, das sich in der Nähe des hinteren Endes der Schnecke 10 befindet (ein linkes Ende, wie in FIG. 2 gezeigt). Der Flansch 31 und/oder das Gehäuse 40 des Untersetzungsgetriebes ist mit ersten Langlöchern 32 versehen, die sich in einer Umfangsrichtung erstrecken, d. h., die ersten Langlöcher 32 können sich auf dem Flansch 31 befinden, das Gehäuse 40 des Untersetzungsgetriebes ist mit einer Vielzahl von Gewindelöchern an Positionen versehen, die dem Flansch 31 entsprechen (wie in dieser Ausführungsform), oder der Flansch 31 ist mit Gewindelöchern versehen, und das Gehäuse 40 des Untersetzungsgetriebes kann ebenfalls mit den ersten Langlöchern 32 an Positionen versehen sein, die dem Flansch 31 entsprechen.

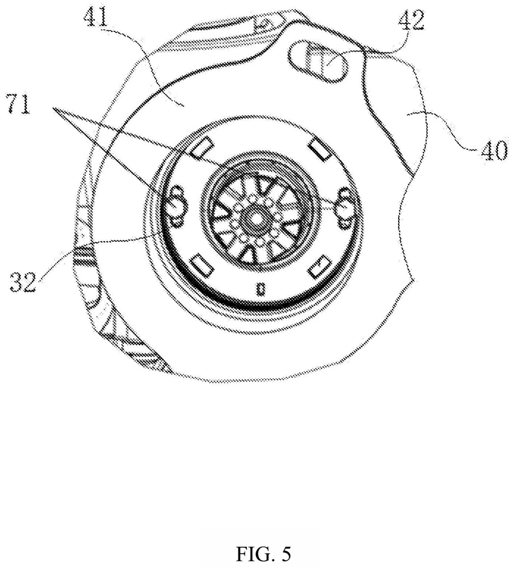

In dieser Ausführungsform gilt, wie in FIG. 1 und FIG. 5 gezeigt, wenn die Einstellhülse 30 im Gehäuse 40 des Untersetzungsgetriebes vorinstalliert ist und wenn die Einstellhülse 30 gedreht wird, um die Anforderungen an das Zahnspiel zwischen dem Schneckenrad 20 und der Schnecke 10 zu erfüllen, werden erste Befestigungselemente 71 in die Gewindelöcher des Gehäuses 40 des Untersetzungsgetriebes eingeführt, nachdem sie durch die ersten Langlöcher 32 hindurchgeführt wurden, und dann angezogen, um die Befestigung der Einstellhülse 30 und des Gehäuses 40 des Untersetzungsgetriebes zu erreichen. Zu diesem Zeitpunkt ist der zweite Mittenabstand zwischen der Schnecke 10 und dem Schneckenrad 20 bestimmt, und eine Position der Schnecke 10 wird nicht mehr verändert.

Längen der ersten Langlöcher 32 (oder die Größen der Mittenwinkel θ1 der ersten Langlöcher 32) entlang der Umfangsrichtung können einerseits den Drehwinkel der Einstellhülse 30 begrenzen, wodurch das Phänomen einer unmöglichen Drehmomentübertragung oder eines starken Zahnradverschleißes vermieden werden kann, wenn der zweite Mittenabstand D2 zwischen der Schnecke 10 und dem Schneckenrad 20 zu weit oder zu eng ist, was durch einen übermäßig großen Drehwinkel der Einstellhülse 30 verursacht wird, und auch Zeit bei der Einstellung des Drehwinkels der Einstellhülse 30 einsparen kann. Andererseits wird die Einstellhülse 30 um die dritte Mittelachse O3 gedreht, um die ersten Langlöcher 32 auf dem Flansch 31 anzutreiben, sich ebenfalls um die dritte Mittelachse O3 zu drehen, die Längen der ersten Langlöcher 32 entlang der Umfangsrichtung liegen innerhalb des vorgegebenen Drehwinkels der Einstellhülse 30, und die ersten Langlöcher 32 können stets die Gewindelöcher des Gehäuses 40 des Untersetzungsgetriebes entlang der Umfangsrichtung abdecken, so dass die ersten Befestigungselemente 71 an den Gewindelöchern am Gehäuse 40 des Untersetzungsgetriebes festgezogen werden können, nachdem sie durch die ersten Langlöcher 32 hindurchgeführt wurden, wodurch eine Befestigung der Einstellhülse 30 und des Gehäuses 40 des Untersetzungsgetriebes erreicht wird.

In einigen Ausführungsformen ist der Flansch 31 mit zwei ersten Langlöchern 32 in Umfangsrichtung versehen, wobei die beiden ersten Langlöcher 32 mittig und symmetrisch angeordnet sein können. Wenn somit die Einstellhülse 30 über den Flansch 31 am Gehäuse 40 des Untersetzungsgetriebes befestigt ist, kann eine Kraft in Umfangsrichtung gleichmäßiger sein.

In einigen Ausführungsformen umfasst die Einstellvorrichtung 100 für ein Zahnspiel zwischen einem Schneckenrad und einer Schnecke ferner ein Motorgehäuse 50 und eine Motorabtriebswelle 60, die Motorabtriebswelle 60 befindet sich innerhalb des Motorgehäuses 50 und hat eine feste Position, die Motorabtriebswelle 60 kann sich relativ zum Motorgehäuse 50 um eine vierte Mittelachse O4 drehen, und die Motorabtriebswelle 60 wird verwendet, um ein Motordrehmoment über eine Kupplung auf die Schnecke 10 zu übertragen.

Die Einstellvorrichtung 100 für ein Zahnspiel zwischen einem Schneckenrad und einer Schnecke umfasst ferner eine Klauenkupplung 80, die elastisch und starr zwischen der Schnecke 10 und der Motorabtriebswelle 60 verbunden ist.

Die Klauenkupplung 80 umfasst zwei starre Metallwellenhülsen 81 und einen Klauengummieinsatz 82, wobei sich der Klauengummieinsatz 82 zwischen den beiden Metallwellenhülsen 81 befindet und die Klauenkupplung 80 sowohl eine bestimmte Verformungsfähigkeit als auch eine bestimmte Steifigkeit aufweist. Insbesondere sind die beiden Metallwellenhülsen 81 jeweils an einem Endabschnitt der Schnecke 10 und einem Endabschnitt der Motorabtriebswelle 60 drehfest angebracht, und der Klauengummieinsatz 82 befindet sich zwischen einer Endfläche der Schnecke 10 und einer Endfläche der Motorabtriebswelle 60. Der Klauengummieinsatz 82 ermöglicht eine flexible Verbindung zwischen der Schnecke 10 und der Motorabtriebswelle 60, und wenn die Schnecke 10 einer äußeren Stoßkraft ausgesetzt ist, kann die Stoßkraft isoliert werden, um den Motor zu schützen. Der Klauengummieinsatz 82 besteht in der Regel aus Gummi oder Polyurethan. Die Metalllwellenhülsen 81 ermöglichen, dass die Klauenkupplung 80 eine gewisse Steifigkeit aufweist, wodurch eine stabile Übertragung und Abgabe des Motordrehmoments gewährleistet ist.

Ferner ist ein Endabschnitt des Gehäuses 40 des Untersetzungsgetriebes mit einer Verbindungsplatte 41 versehen, die Verbindungsplatte 41 ist darauf mit einem zweiten Langloch 42 versehen, das sich entlang einer Umfangsrichtung erstreckt, ein Ende des Motorgehäuses 50, das sich in der Nähe der Verbindungsplatte 41 des Gehäuses 40 des Untersetzungsgetriebes befindet, ist mit einem Gewindeloch 51 versehen, und eine Position des Gewindelochs 51 auf dem Motorgehäuse 50 ist fest, d. h., die Position des Gewindelochs 51 relativ zur Motorabtriebswelle 60 ist fest.

Nachdem die Einstellhülse 30 gedreht wurde, um die Anforderungen an das Zahnspiel zwischen der Schnecke 10 und dem Schneckenrad 20 zu erfüllen, wird die Einstellhülse 30 am Gehäuse 40 des Untersetzungsgetriebes befestigt, so dass auch die Position der Schnecke 10 fixiert ist. Die Motorabtriebswelle 60 steht über die Klauenkupplung 80 mit der Schnecke 10 in Übertragungsverbindung, und die vierte Mittelachse O4 der Motorabtriebswelle 60 ist koaxial mit der ersten Mittelachse O1 der Schnecke 10. Das zweite Langloch 42 wird mit dem Gewindeloch 51 ausgerichtet, und ein zweites Befestigungselement 72 wird in das Gewindeloch 51 eingeführt, nachdem es durch das zweite Langloch 42 hindurchgeführt wurde, und dann festgezogen, so dass das Gehäuse 40 des Untersetzungsgetriebes und das Motorgehäuse 50 befestigt sind.

Aus den obigen Ausführungen ist ersichtlich, dass die erste Mittelachse O1 der Schnecke 10 eine kreisförmige Bewegung um die dritte Mittelachse O3 als Achse ausführen kann. Da die Motorabtriebswelle 60 koaxial mit der Schnecke 10 sein muss, bewegt sich die Motorabtriebswelle 60 bei der Bewegung der Schnecke 10 gemäß der oben beschriebenen Bewegungsbahn ebenfalls entlang der Bewegungsbahn der ersten Mittelachse O1 mit der Schnecke 10. Da die Position der Motorabtriebswelle 60, des Motorgehäuses 50 und der Gewindelöcher 51 außerdem unverändert bleibt, ist dies gleichbedeutend damit, dass der gesamte Motor mit der Motorabtriebswelle 60 entlang der Bewegungsbahn der ersten Mittelachse O1 der Schnecke 10 eingestellt wird. Daher ist bei unterschiedlichen Anforderungen an das Zahnspiel zwischen dem Schneckenrad 20 und der Schnecke 10 auch die Position des Motorgehäuses 50 unterschiedlich.

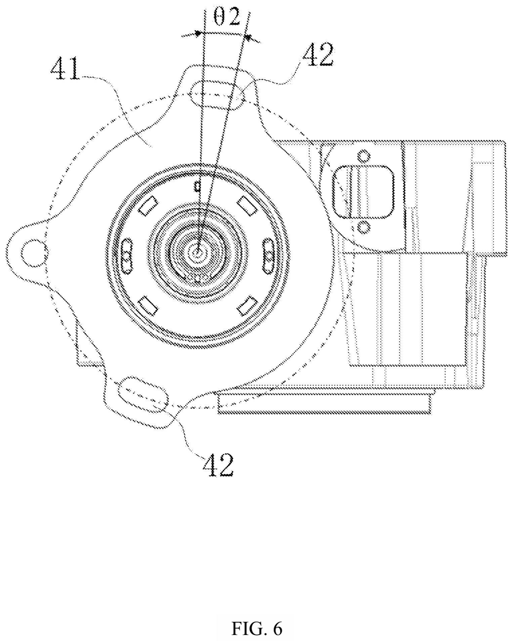

Wie in FIG. 6 gezeigt, ist die Verbindungsplatte 41 des Gehäuses 40 des Untersetzungsgetriebes mit den zweiten Langlöchern 42 versehen, und die Gradzahlen der Mittenwinkel θ2 der zweiten Langlöcher 42 können größer oder gleich den Gradzahlen der Mittenwinkel θ1 der ersten Langlöcher 32 sein. So kann erreicht werden, dass die Gewindelöcher des Motorgehäuses 50 in verschiedenen Positionen des Motorgehäuses 50 stets in die zweiten Langlöcher 42 entlang der Umfangsrichtung fallen, wodurch der Einbau des Motorgehäuses 50 in mehreren Positionen unter verschiedenen Anforderungen an das Zahnspiel zwischen dem Schneckenrad 20 und der Schnecke 10 erreicht wird.

In einigen Ausführungsformen ist die Verbindungsplatte 41 des Gehäuses 40 des Untersetzungsgetriebes mit zwei zweiten Langlöchern 42 in Umfangsrichtung versehen. Die beiden zweiten Langlöcher 42 können eine feste Verbindung zwischen der Verbindungsplatte 41 des Gehäuses 40 des Untersetzungsgetriebes und dem Motorgehäuse 50 ermöglichen, so dass eine gleichmäßigere Kraftwirkung erzielt wird.

Basierend auf demselben erfinderischen Konzept stellt die vorliegende Offenbarung einen Lenkgetriebemechanismus für ein Lenkgetriebesystem eines Fahrzeugs bereit, der die oben beschriebene Einstellvorrichtung 100 für ein Zahnspiel zwischen einem Schneckenrad und einer Schnecke umfasst. Was die Funktionen des Lenkgetriebemechanismus in der obigen Ausführungsform anbelangt, so wurden spezifische Ausführungsformen in den Ausführungsformen im Zusammenhang mit der Einstellvorrichtung für ein Zahnspiel zwischen einem Schneckenrad und einer Schnecke ausführlich beschrieben, die hierin nicht im Detail beschrieben und veranschaulicht sind.

Es versteht sich, dass sich in der vorliegenden Offenbarung die Formulierung "eine Vielzahl von" auf zwei oder mehr als zwei bezieht und andere Mengenangaben in ähnlicher Weise zu verstehen sind. Die Formulierung "und/oder" beschreibt eine Zuordnungsbeziehung zwischen zugeordneten Objekten und gibt an, dass drei Beziehungen bestehen können. Beispielsweise kann die Formulierung "A und/oder B" drei Fälle angeben: A existiert allein, A und B existieren gleichzeitig, und B existiert allein. Das Zeichen "/" bedeutet im Allgemeinen, dass die vorherigen und nachfolgenden zugeordneten Objekte in einer "oder"-Beziehung zueinander stehen. Die Singularformen "ein/eines", "eine/einer", "dem/einem" und "der/die/das" sollen auch Pluralformen umfassen, sofern im Kontext keine offensichtliche andere Bedeutung angegeben ist.

Es versteht sich ferner, dass die Begriffe "erster", "zweiter" usw. zur Beschreibung verschiedener Konstruktionen verwendet werden, diese Konstruktionen jedoch nicht auf diese Begriffe beschränkt sind. Diese Begriffe dienen ausschließlich dazu, Konstruktionen derselben Art voneinander zu unterscheiden, und implizieren keine bestimmte Reihen- oder Rangfolge. In der Tat können Ausdrücke wie "erster" und "zweiter" völlig synonym verwendet werden. Beispielsweise kann, ohne vom Umfang der vorliegenden Offenbarung abzuweichen, eine erste Konstruktion auch als zweite Konstruktion bezeichnet werden, und analog dazu kann die zweite Konstruktion auch als erste Konstruktion bezeichnet werden.

Es versteht sich ferner, dass Begriffe wie "mittig", "längs", "quer", "vorne", "hinten", "hoch", "runter", "links", "rechts", "vertikal", "horizontal", "oben", "unten", "innen" und "außen", die Ausrichtungs- oder Positionsbeziehungen auf Grundlage der in den beigefügten Zeichnungen dargestellten Ausrichtungs- oder Positionsbeziehungen meinen, ausschließlich dazu dienen, die Beschreibung der Ausführungsformen zu erleichtern und die Beschreibung zu vereinfachen, und nicht dazu, anzuzeigen oder zu implizieren, dass eine bezeichnete Vorrichtung oder Komponente eine bestimmte Ausrichtung aufweisen oder in einer bestimmten Ausrichtung konstruiert und betrieben werden muss.

Nach Durchsicht der Beschreibung und Umsetzung der hierin offenbarten Erfindung werden dem Fachmann ohne Weiteres weitere Ausführungsformen der vorliegenden Offenbarung in den Sinn kommen. Die vorliegende Anmeldung soll alle Variationen, Einsatzzwecke oder Änderungen im Wege einer Anpassung der vorliegenden Offenbarung abdecken, wobei diese Variationen, Einsatzzwecke oder Änderungen im Wege einer Anpassung den allgemeinen Grundsätzen der vorliegenden Offenbarung entsprechen und allgemeines Wissen oder übliche technische Mittel in diesem Bereich umfassen, die in der vorliegenden Offenbarung nicht offenbart sind. Die Beschreibung und die Ausführungsformen werden lediglich als Beispiele betrachtet, und der tatsächliche Umfang und Geist der vorliegenden Offenbarung werden durch den Umfang der nachfolgenden Ansprüche angegeben.

Es versteht sich, dass die vorliegende Offenbarung nicht auf die oben beschriebenen und in den beigefügten Zeichnungen dargestellten genauen Konstruktionen beschränkt ist und dass verschiedene Modifikationen und Änderungen vorgenommen werden können, ohne vom Umfang der Offenbarung abzuweichen. Der Umfang der vorliegenden Offenbarung wird nur durch den Umfang der beigefügten Ansprüche begrenzt.

## Patentansprüche

1. Einstellvorrichtung (100) für ein Zahnspiel zwischen einem Schneckenrad und einer Schnecke, umfassend:
eine Schnecke (10), die um eine erste Mittelachse (O1) drehbar ist;
ein Schneckenrad (20), das um eine zweite Mittelachse (O2) drehbar ist und mit der Schnecke (10) in Eingriff steht; und
eine Einstellhülse (30), die außerhalb der Schnecke (10) angebracht ist und ein Drehen der Schnecke (10) um die erste Mittelachse (O1) innerhalb der Einstellhülse (30) ermöglicht,
wobei die Einstellhülse (30) exzentrisch zur Schnecke (10) angeordnet ist und durch Drehung der Einstellhülse (30) eine Position der ersten Mittelachse (O1) der Schnecke (10) geändert wird, um einen Mittenabstand zwischen der ersten Mittelachse (O1) und der zweiten Mittelachse (O2) des Schneckenrads (20) einzustellen, wodurch eine Einstellung eines Zahnspiels zwischen der Schnecke (10) und dem Schneckenrad (20) erreicht wird.

2. Einstellvorrichtung (100) für ein Zahnspiel zwischen einem Schneckenrad und einer Schnecke nach Anspruch 1, wobei
ein Endabschnitt der Einstellhülse (30) mit einem Flansch (31) versehen ist, der Flansch (31) mit einem ersten Langloch (32) versehen ist, das sich entlang einer Umfangsrichtung erstreckt, die Einstellvorrichtung (100) für ein Zahnspiel zwischen einem Schneckenrad und einer Schnecke ferner ein Gehäuse (40) für ein Untersetzungsgetriebe umfasst und sich die Einstellhülse (30) innerhalb des Gehäuses (40) für das Untersetzungsgetriebe befindet;
wobei die Einstellhülse (30) durch das erste Langloch (32) innerhalb eines vorgegebenen Drehbereichs stets fest mit dem Gehäuse (40) des Untersetzungsgetriebes verbunden werden kann.

3. Einstellvorrichtung (100) für ein Zahnspiel zwischen einem Schneckenrad und einer Schnecke nach Anspruch 2, wobei
die Einstellvorrichtung (100) für ein Zahnspiel zwischen einem Schneckenrad und einer Schnecke ferner Folgendes umfasst:
ein Motorgehäuse (50), wobei ein Endabschnitt des Motorgehäuses (50) mit einem Gewindeloch (51) versehen ist; und
eine Motorabtriebswelle (60), die sich innerhalb des Motorgehäuses (50) befindet und dazu konfiguriert ist, mit der Schnecke (10) in Übertragungsverbindung zu stehen, wobei eine Position des Motorgehäuses (50) durch Einstellen der Motorabtriebswelle (60) geändert wird, um koaxial mit der Schnecke (10) ausgerichtet zu werden;
wobei ein Endabschnitt des Gehäuses (40) des Untersetzungsgetriebes ferner mit einer Verbindungsplatte (41) versehen ist, die Verbindungsplatte (41) darauf mit einem zweiten Langloch (42) versehen ist, das sich entlang einer Umfangsrichtung erstreckt, und das zweite Langloch (42) das Gewindeloch (51) entlang der Umfangsrichtung stets abdeckt, nachdem die Position des Motorgehäuses (50) geändert wurde.

4. Einstellvorrichtung (100) für ein Zahnspiel zwischen einem Schneckenrad und einer Schnecke nach Anspruch 2, wobei
eine Außenwand der Einstellhülse (30) mit einer Innenwand des Gehäuses (40) des Untersetzungsgetriebes zusammenpasst, und vor der Befestigung der Einstellhülse (30) an dem Gehäuse (40) des Untersetzungsgetriebes die Einstellhülse (30) um eine dritte Mittelachse (O3) in dem Gehäuse (40) des Untersetzungsgetriebes drehbar ist.

5. Einstellvorrichtung (100) für ein Zahnspiel zwischen einem Schneckenrad und einer Schnecke nach Anspruch 4, wobei
die Schnecke (10) ein vorderes Lager (11) und ein hinteres Lager (12) umfasst, die jeweils an beiden Enden der Schnecke (10) angebracht sind und dazu verwendet werden, ein Drehen der Schnecke (10) um die erste Mittelachse (O1) innerhalb der Einstellhülse (30) zu ermöglichen und die erste Mittelachse (O1) parallel zur dritten Mittelachse (O3) zu stellen.

6. Einstellvorrichtung (100) für ein Zahnspiel zwischen einem Schneckenrad und einer Schnecke nach Anspruch 1, wobei
ein mittlerer Abschnitt der Einstellhülse (30) mit einer Öffnung (33) versehen ist, die zum Ermöglichen verwendet wird, dass die in der Einstellhülse (30) befindliche Schnecke (10) mit dem Schneckenrad (20) in Kontakt und in Eingriff kommen kann.

7. Einstellvorrichtung (100) für ein Zahnspiel zwischen einem Schneckenrad und einer Schnecke nach Anspruch 3, wobei
die Einstellvorrichtung (100) für ein Zahnspiel zwischen einem Schneckenrad und einer Schnecke ferner eine Klauenkupplung (80) umfasst, die elastisch und starr zwischen der Schnecke (10) und der Motorabtriebswelle (60) verbunden ist.

8. Einstellvorrichtung (100) für ein Zahnspiel zwischen einem Schneckenrad und einer Schnecke nach Anspruch 2, wobei
der Flansch (31) mit zwei der ersten Langlöcher (32) in Umfangsrichtung versehen ist.

9. Einstellvorrichtung (100) für ein Zahnspiel zwischen einem Schneckenrad und einer Schnecke nach Anspruch 3, wobei
die Verbindungsplatte (41) des Gehäuses (40) des Untersetzungsgetriebes mit zwei der zweiten Langlöcher (42) in Umfangsrichtung versehen ist.

10. Lenkgetriebemechanismus für ein Lenkgetriebesystem eines Fahrzeugs, umfassend: die Einstellvorrichtung (100) für ein Zahnspiel zwischen einem Schneckenrad und einer Schnecke nach einem der Ansprüche 1-9.
